# EUROPEAN PATENT SPECIFICATION

(11) **EP 3 449 743 B1**
(45) Date of publication and mention of the grant of the patent: **13.05.2020**
(21) Application number: 18156560.7
(22) Date of filing: 13.02.2018
(51) Int. Cl.: A41D 27/28, A41D 31/12, A41D 31/14

(54) **FLEXIBLE WEB FOR CLOTHING**
FLEXIBLES GEWEBE FÜR BEKLEIDUNG
BANDE SOUPLE POUR VÊTEMENTS

(30) Priority: 31.08.2017 TW 106212906 U
(43) Date of publication of application: 06.03.2019
(73) Proprietor: Wisher Industrial Co., Ltd., 10343 Taipei City (TW)
(72) Inventor: CHEN, Chun-Chou, 10343 Taipei City (TW); HSIEH, Tsuo-Cheng, 10343 Taipei City (TW); LU, Chun-Ming, 10343 Taipei City (TW); CHEN, Chi-Ling, 10343 Taipei City (TW)
(74) Representative: Dehns

(56) References cited:
- TW-U- M 552 932
- US-A1- 2005 208 857

## Description

The disclosure relates to a flexible web for clothing, and more particularly to a flexible web for clothing which includes a plurality of lining pieces made from an absorbent polymer.

Due to the continuously increasing demand for comfortability of clothing, fabric characteristics such as moisture absorbance, breathability, and the like have become issues which are widely researched. However, warmth preservation may be compromised in an attempt to provide clothing with moisture absorbance and breathability.

US 2005/0208857 discloses a flexible web for clothing according to the preamble of claim 1.

US 7, 754, 626 discloses an article of apparel that includes a textile with at least one property that changes upon exposure to a physical stimulus . The textile has a modifiable structure formed from one or more yarns that exhibit a dimensional transformation upon exposure to the physical stimulus. The yarns have a first set of dimensions when unexposed to the physical stimulus, and the yarns have a second set of dimensions when exposed to the physical stimulus. The structure of the textile is modified by exposing the textile to the physical stimulus such that the yarns transform from the first set of dimensions to the second set of dimensions and change the property of the textile.

An object of the disclosure is to provide a flexible web for clothing which includes a plurality of lining pieces made from an absorbent polymer to regulate the breathability thereof.

According to the disclosure, there is provided a flexible web for clothing comprising a fabric substrate layer and a lining piece unit. The fabric substrate layer has a plurality of slits which are displaced from each other and each of which includes a first slit segment and a second slit segment. The lining piece unit is made from an absorbent polymer and includes a plurality of lining pieces each of which has a first marginal edge and a second marginal edge, and each of which is configured such that when bonded to the fabric substrate layer, the first and second marginal edges respectively border at the first and second slit segments.

Other features and advantages of the disclosure will become apparent in the following detailed description of the embodiment (s) with reference to the accompanying drawings, of which:
Figure 1 is a perspective view of a first embodiment of a flexible web for clothing according to the disclosure in a state prior to water absorption;
Figure 2 is a perspective view of the first embodiment in a state after water absorption;
Figure 3 is a fragmentary sectional view of the first embodiment in a state prior to water absorption;
Figure 4 is a fragmentary sectional view of the first embodiment in a state after water absorption;
Figure 5 is a fragmentary sectional view of a second embodiment of a flexible web for clothing according to the disclosure in a state prior to water absorption;
Figure 6 is a fragmentary sectional view of the second embodiment in a state after water absorption;
Figure 7 is a schematic bottom view of the second embodiment;
Figure 8 is a fragmentary sectional view of a third embodiment of a flexible web for clothing according to the disclosure in a state prior to water absorption;
Figure 9 is a fragmentary sectional view of the third embodiment in a state after water absorption;
Figure 10 is a schematic bottom view of the third embodiment;
Figure 11 is a perspective view of a fourth embodiment of a flexible web for clothing according to the disclosure in a state prior to water absorption;
Figure 12 is a perspective view of the fourth embodiment in a state after water absorption;
Figure 13 is a perspective view of a fifth embodiment of a flexible web for clothing according to the disclosure in a state prior to water absorption;
Figure 14 is a perspective view of the fifth embodiment in a state after water absorption;
Figure 15 is a fragmentary sectional view of a sixth embodiment of a flexible web for clothing according to the disclosure;
Figure 16 is a perspective view of a seventh embodiment of a flexible web for clothing according to the disclosure in a state prior to water absorption; and
Figure 17 is a perspective view of the seventh embodiment in a state after water absorption.

Before the disclosure is described in greater detail, it should be noted that where considered appropriate, reference numerals or terminal portions of reference numerals have been repeated among the figures to indicate corresponding or analogous elements, which may optionally have similar characteristics.

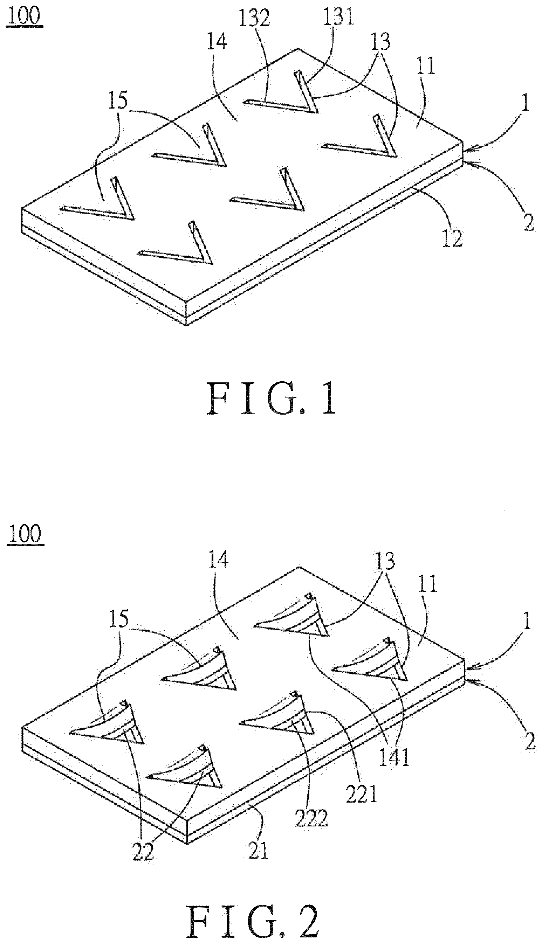

Referring to Figures 1, 2, 3, and 4, a first embodiment of a flexible web 100 for clothing according to the disclosure is shown to comprise a fabric substrate layer 1 and a lining piece unit 2. The flexible web 100 may be used alone or in combination with other fabric materials to form clothes, shoe uppers, and the like.

The fabric substrate layer 1 has an outer surface 11, an inner surface 12, and a plurality of slits 13 extending through the outer surface 11 and the inner surface 12 and displaced from each other. Each of the slits 13 includes a first slit segment 131 and a second slit segment 132, which respectively extend along first and second lines that form an angle and which share a common endpoint. In other words, each of the slits 13 has a V-shape. Accordingly, the fabric substrate layer 1 is composed of a main body 14 and a plurality of triangular portions 15 respectively defined by the V-shaped slits 13.

The lining piece unit 2 is provided on the inner surface 12 of the fabric substrate layer 1 and is disposed to be in contact with the skin of a wearer wearing an article of clothing made from the flexible web 100. The lining piece unit 2 is made from an absorbent polymer, and includes a plurality of lining pieces 22 each of which has a first marginal edge 221 and a second marginal edge 222, and each of which is configured such that when bonded to the fabric substrate layer 1, the first and second marginal edges 221, 222 respectively border at the first and second slit segments 131, 132. Examples of the absorbent polymer include, but are not limited to thermoplastic polyurethane, thermoplastic elastomer, and polytetrafluoroethylene.

The first and second marginal edges 221, 222 of each of the lining pieces 22 define an angled contour such that each of the lining pieces 22 is provided with a free triangular portion which is capable of warping. In addition, the lining piece unit 2 is a lining layer 21 which is configured to simulate the fabric substrate layer 1 in shape such that the fabric substrate layer 1 is superimposed on the lining layer 2 and such that the lining layer 21 is formed with a plurality of slits corresponding to the slits 13 of the fabric substrate layer 1.

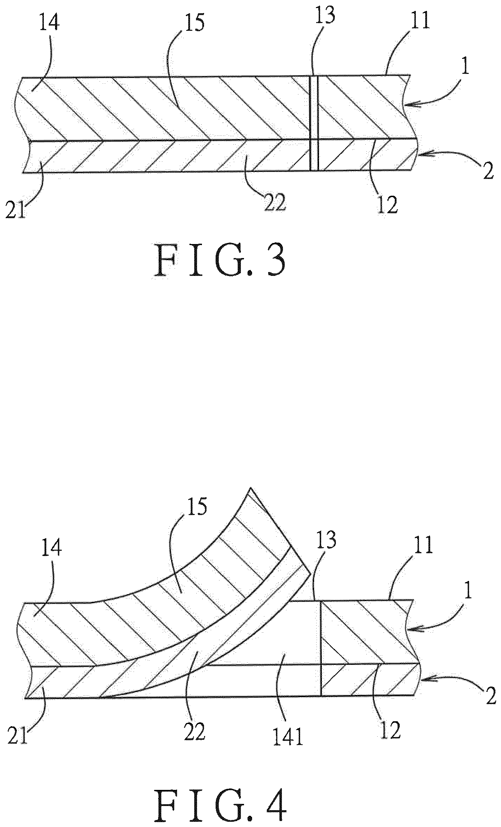

When the lining layer 2, specifically the lining pieces 22, absorbs water moisture(e.g., sweat), the lining pieces 22 will swell such that the lining pieces 22 and the triangular portions 15 warp upwardly to form a plurality of apertures 141 in the flexible web 100, as shown in Figures 2 and 4. When the lining layer 2, specifically the lining pieces 22, is in a dry state, the triangular portions 15 are flush with the main body 14, as shown in Figures 1 and 3.

Accordingly, when a wearer wearing a sports shirt made from the flexible web 100 of the disclosure is not sweating and the lining piece unit 2 in contact with the wearer's skin is thus in a dry state, the triangular portions 15 are flush with the main body 14, thereby achieving a warmth preservation effect. When the lining piece unit 2 is wet from absorbing the wearer's sweat, the lining pieces 22 and the triangular portions 15 will warp upwardly to form a plurality of apertures 141 in the flexible web 100 such that air may flow through the apertures 141 to thereby provide a breathability effect for the sports shirt.

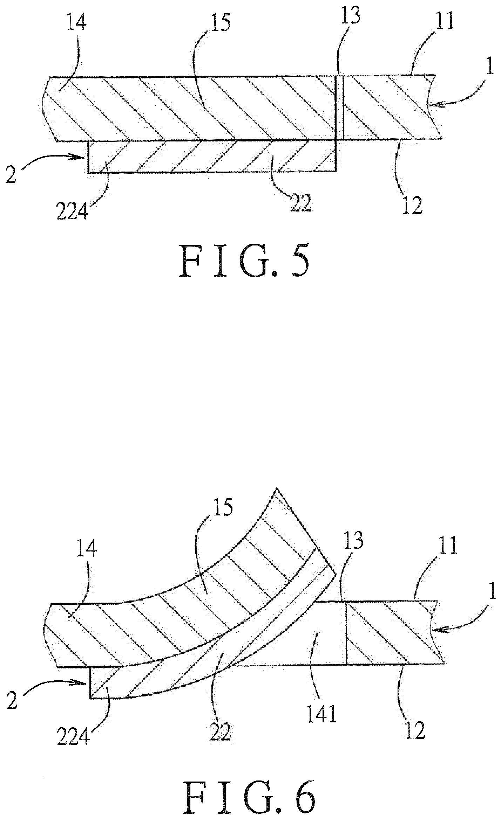

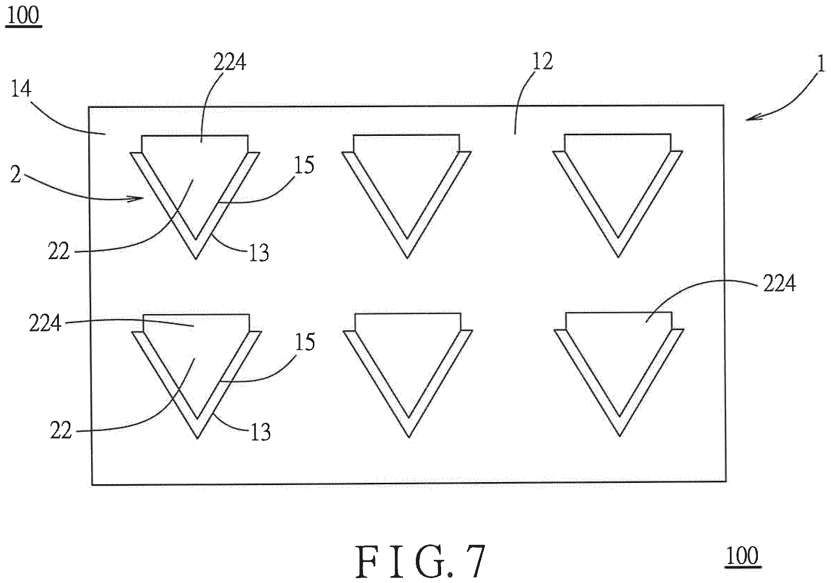

Referring to Figures 5, 6, and 7, a second embodiment of a flexible web 100 for clothing according to the disclosure is shown to be similar to the first embodiment except that the lining piece unit 2 in the second embodiment is composed of a plurality of the lining pieces 22 each of which further includes a base strip 224 extending from the free triangular portion and bonded to the fabric substrate layer 1.

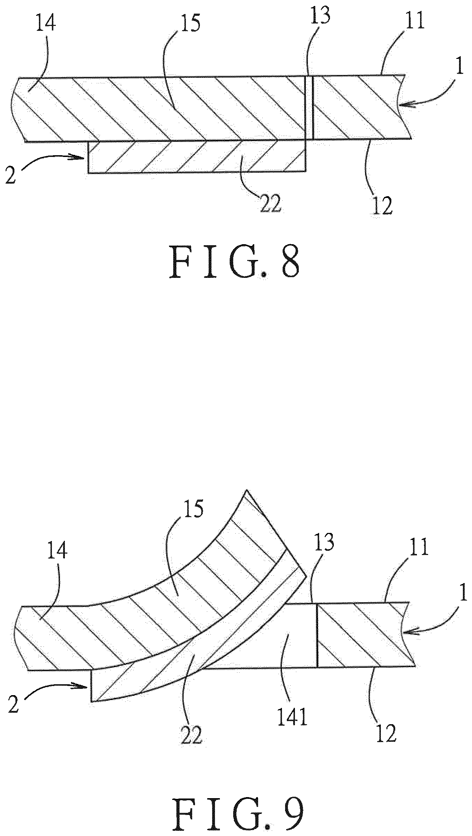

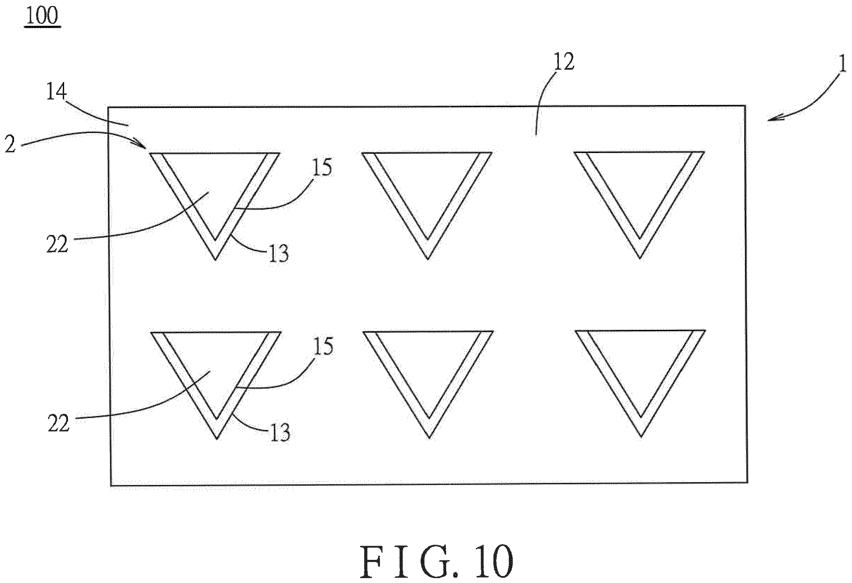

Referring to Figures 8, 9, and 10, a third embodiment of a flexible web 100 for clothing according to the disclosure is shown to be similar to the second embodiment except that the lining piece unit 2 in the third embodiment is composed of a plurality of the lining pieces 22 each of which does not include the base strip 224 included in each of the lining pieces 22 in the second embodiment.

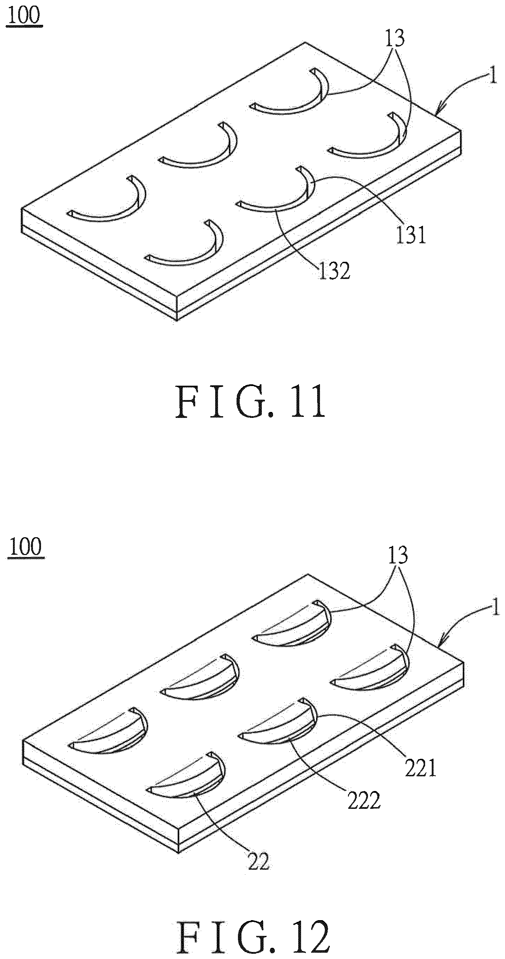

Referring to Figures 11 and 12, a fourth embodiment of a flexible web 100 for clothing according to the disclosure is shown to be similar to the first embodiment except that in the fourth embodiment, the first and second slit segments 131, 132 of each of the slits 13 extend to each other along a circumferential direction, and the first and second marginal edges 221, 222 of each of the lining pieces 22 define a semicircular contour such that each of the lining pieces 22 is provided with a free semicircular portion which is capable of warping. In addition, each of the lining pieces 22 may further include a base strip (not shown in Figures 11 and 12) extending from the free semicircular portion and bonded to the fabric substrate layer 1.

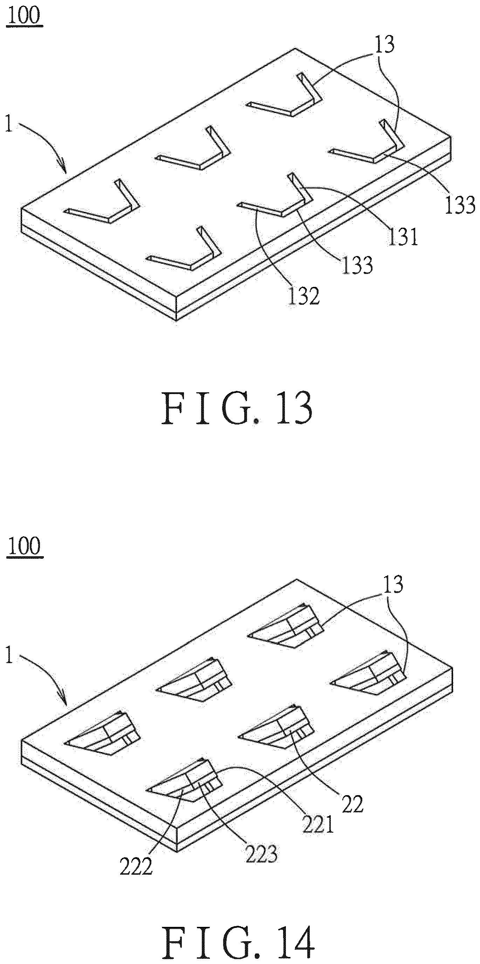

Referring to Figures 13 and 14, a fifth embodiment of a flexible web 100 for clothing according to the disclosure is shown to be similar to the first embodiment except that in the fifth embodiment, each of the slits 13 further includes a third slit segment 133 interconnecting the first and second slit segments 131, 132, and each of the lining pieces 22 further has a third marginal edge 223 interconnecting the first and second marginal edges 221, 222 and bordering at the third slit segment 133. Furthermore, in the fifth embodiment, the first, second and third marginal edges 221, 222, 223 of each of the lining pieces 22 define a truncated contour such that each of the lining pieces 22 is provided with a free trapezoid portion which is capable of warping. In addition, each of the lining pieces 22 may further include a base strip (not shown in Figures 13 and 14) extending from the free trapezoid portion and bonded to the fabric substrate layer 1.

It should be noted that in addition to the aforesaid, each of the lining pieces 22 may be configured to have other geometrical shapes, for example, a rectangular shape, a polygonal shape, and the like.

In the aforesaid embodiments, the lining piece unit 2 is applied onto the inner surface 12 of the fabric substrate layer 1 by any conventional means such as coating.

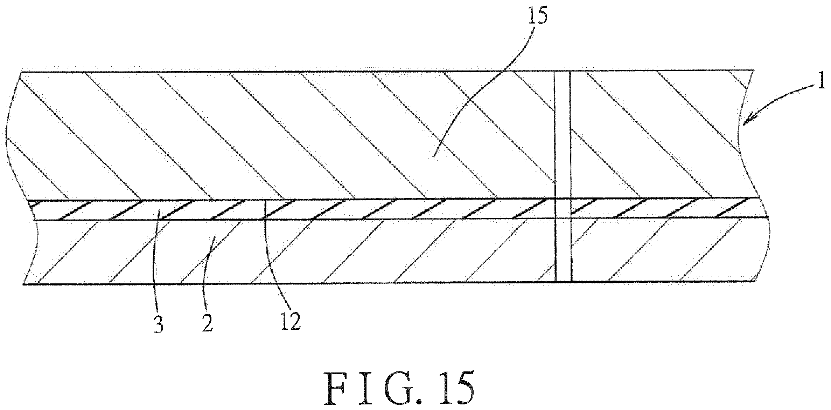

Referring to Figure 15, a sixth embodiment of a flexible web 100 for clothing according to the disclosure is shown to be similar to the first embodiment except that an adhesive layer 3 is further included and is sandwiched between the fabric substrate layer 1 and the lining piece unit 2. The adhesive layer 3 is made from, for example, a waterproof glue.

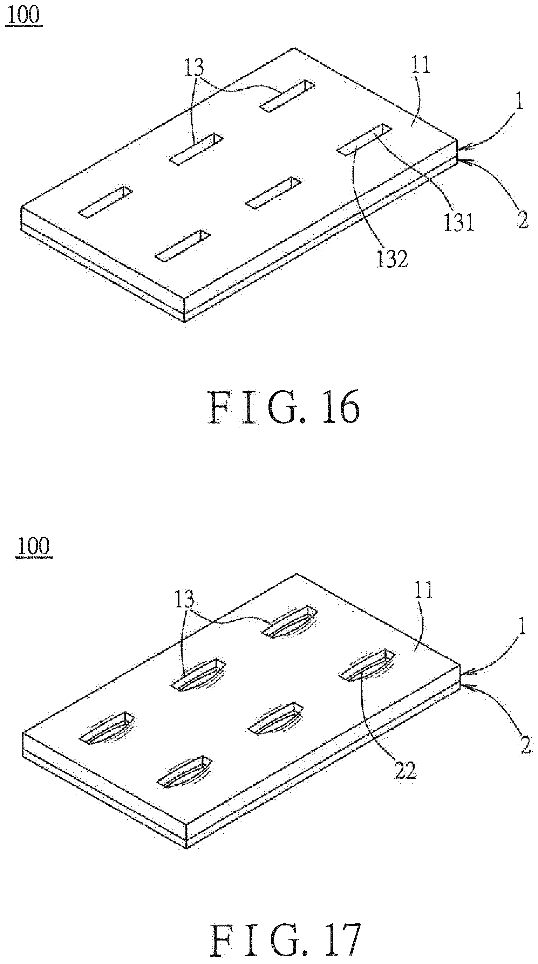

Referring to Figures 16 and 17, a seventh embodiment of a flexible web 100 for clothing according to the disclosure is shown to be similar to the first embodiment except that the first and second slit segments 131, 132 of each of the slits 13 in the seventh embodiment are in line with each other. When the lining pieces 22 absorb water moisture (e.g. sweat), a portion of each of the lining pieces 22 proximate to a corresponding one of the slits 13 bulges and the size of each of the slits 13 is thus enlarged.

## Claims

1. A flexible web (100) for clothing, comprising
a fabric substrate layer (1) having a plurality of slits (13) which are displaced from each other and each of which includes a first slit segment (131) and a second slit segment (132); **characterized by** and
a lining piece unit (2) made from an absorbent polymer and including a plurality of lining pieces (22) each of which has a first marginal edge (221) and a second marginal edge (222), and each of which is configured such that when bonded to said fabric substrate layer (1), said first and second marginal edges (221, 222) respectively border at said first and second slit segments (131, 132).

2. The flexible web (100) for clothing as claimed in Claim 1, **characterized in that** said first and second slit segments (131, 132) respectively extend along first and second lines which form an angle.

3. The flexible web (100) for clothing as claimed in Claim 1 or 2, **characterized in that** said first and second slit segments (131, 132) are in line with each other.

4. The flexible web (100) for clothing as claimed in any one of Claims 1 to 3, **characterized in that** said first and second slit segments (131, 132) extend to each other along a circumferential direction.

5. The flexible web (100) for clothing as claimed in any one of Claims 1 to 4, **characterized in that** said first and second slit segments (131, 132) share a common endpoint.

6. The flexible web (100) for clothing as claimed in any one of Claims 1 to 5, **characterized in that** each of said slits (13) further includes a third slit segment (133) interconnecting said first and second slit segments (131, 132), and each of said lining pieces (22) further has a third marginal edge (223) interconnecting said first and second marginal edges (221, 222) and bordering at said third slit segment (133).

7. The flexible web (100) for clothing as claimed in any one of Claims 1 to 6, **characterized in that** said first and second marginal edges (221, 222) of each of said lining pieces (22) define a semicircular contour such that each of said lining pieces (22) is provided with a free semicircular portion which is capable of warping.

8. The flexible web (100) for clothing as claimed in any one of Claims 1 to 7, **characterized in that** said first and second marginal edges (221, 222) of each of said lining pieces (22) define an angled contour such that each of said lining pieces (22) is provided with a free triangular portion which is capable of warping.

9. The flexible web (100) for clothing as claimed in any one of Claims 6 to 8, **characterized in that** said first, second and third marginal edges (221, 222, 223) of each of said lining pieces (22) define a truncated contour such that each of said lining pieces (22) is provided with a free trapezoid portion which is capable of warping.

10. The flexible web (100) for clothing as claimed in any one of Claims 1 to 9, **characterized in that** said lining piece unit (2) is a lining layer (21) which is configured to simulate said fabric substrate layer (1) in shape such that said fabric substrate layer (1) is superimposed on said lining layer (2) and such that said lining layer (21) is formed with a plurality of slits corresponding to said slits (13) of said fabric substrate layer (1).

11. The flexible web (100) for clothing as claimed in any one of Claims 7 to 10, **characterized in that** each of said lining pieces (22) further includes a base strip (224) extending from said free semicircular portion and bonded to said fabric substrate layer (1).

12. The flexible web (100) for clothing as claimed in any one of Claims 8 to 11, **characterized in that** each of said lining pieces (22) further includes a base strip (224) extending from said free triangular portion and bonded to said fabric substrate layer (1).

13. The flexible web (100) for clothing as claimed in any one of Claims 9 to 12, **characterized in that** each of said lining pieces (22) further includes a base strip (224) extending from said free trapezoid portion and bonded to said fabric substrate layer (1).

14. The flexible web (100) for clothing as claimed in any one of Claims 1 to 13, **characterized in that** said absorbent polymer is selected from the group consisting of thermoplastic polyurethane, thermoplastic elastomer, and polytetrafluoroethylene.

15. The flexible web (100) for clothing as claimed in any one of Claims 1 to 14, further **characterized by** an adhesive layer (3) sandwiched between said fabric substrate layer (1) and said lining piece unit (2).

## Patentansprüche

1. Flexibles Gewebe (100) für Kleidung, umfassend
eine Stoffsubstratschicht (1), die eine Vielzahl von Schlitzen (13) aufweist, die zueinander versetzt sind und von denen jeder ein erstes Schlitzsegment (131) und ein zweites Schlitzsegment (132) aufweist; **gekennzeichnet durch**
eine Futterteileinheit (2), hergestellt aus einem absorbierenden Polymer und eine Vielzahl von Futterteilen (22) beinhaltend, von denen jedes eine erste Randkante (221) und eine zweite Randkante (222) aufweist und von denen jedes so konfiguriert ist, dass bei Bindung an die Stoffsubstratschicht (1) die erste bzw. zweite Randkante (221, 222) an das erste und zweite Schlitzsegment (131, 132) grenzt.

2. Flexibles Gewebe (100) für Kleidung nach Anspruch 1, **dadurch gekennzeichnet, dass** sich das erste bzw. zweite Schlitzsegment (131, 132) entlang erster und zweiter Linien, die einen Winkel bilden, erstreckt.

3. Flexibles Gewebe (100) für Kleidung nach Anspruch 1 oder 2, **dadurch gekennzeichnet, dass** das erste und zweite Schlitzsegment (131, 132) in einer Linie liegen.

4. Flexibles Gewebe (100) für Kleidung nach einem der Ansprüche 1 bis 3, **dadurch gekennzeichnet, dass** sich das erste und zweite Schlitzsegment (131, 132) entlang einer Umfangsrichtung zueinander erstrecken.

5. Flexibles Gewebe (100) für Kleidung nach einem der Ansprüche 1 bis 4, **dadurch gekennzeichnet, dass** das erste und zweite Schlitzsegment (131, 132) einen gemeinsamen Endpunkt besitzen.

6. Flexibles Gewebe (100) für Kleidung nach einem der Ansprüche 1 bis 5, **dadurch gekennzeichnet, dass** jeder der Schlitze (13) weiter ein drittes Schlitzsegment (133) beinhaltet, das das erste und zweite Schlitzsegment (131, 132) miteinander verbindet, und wobei jedes der Futterteile (22) weiter eine dritte Randkante (223) aufweist, die die erste und zweite Randkante (221, 222) miteinander verbindet und an das dritte Schlitzsegment (133) grenzt.

7. Flexibles Gewebe (100) für Kleidung nach einem der Ansprüche 1 bis 6, **dadurch gekennzeichnet, dass** die erste und zweite Randkante (221, 222) jedes der Futterteile (22) einen halbkreisförmigen Umriss beschreiben, sodass jedes der Futterteile (22) einen freien halbkreisförmigen Abschnitt aufweist, der zur Verkettung fähig ist.

8. Flexibles Gewebe (100) für Kleidung nach einem der Ansprüche 1 bis 7, **dadurch gekennzeichnet, dass** die erste und zweite Randkante (221, 222) jedes der Futterteile (22) einen gewinkelten Umriss bilden, sodass jedes der Futterteile (22) eine freien dreieckigen Abschnitt aufweist, der zur Verkettung fähig ist.

9. Flexibles Gewebe (100) für Kleidung nach einem der Ansprüche 6 bis 8, **dadurch gekennzeichnet, dass** die erste, zweite und dritte Randkante (221, 222, 223) jedes der Futterteile (22) einen gekürzten Umriss bilden, sodass jedes der Futterteile (22) einen freien trapezoiden Abschnittaufweist, der zur Verkettung fähig ist.

10. Flexibles Gewebe (100) für Kleidung nach einem der Ansprüche 1 bis 9, **dadurch gekennzeichnet, dass** die Futterteileinheit (2) eine Futterschicht (21) ist, die konfiguriert ist, um die Stoffsubstratschicht (1) bezüglich der Form nachzubilden, sodass sich die Stoffsubstratschicht (1) über der Futterschicht (2) befindet und sodass die Futterschicht (21) eine Vielzahl von Schlitzen aufweist, die den Schlitzen (13) der Stoffsubstratschicht (1) entsprechen.

11. Flexibles Gewebe (100) für Kleidung nach einem der Ansprüche 7 bis 10, **dadurch gekennzeichnet, dass** jedes der Futterteile (22) des Weiteren einen Trägerstreifen (224) aufweist, der sich von dem freien halbkreisförmigen Abschnitt erstreckt und an die Stoffsubstratschicht (1) gebunden ist.

12. Flexibles Gewebe (100) für Kleidung nach einem der Ansprüche 8 bis 11, **dadurch gekennzeichnet, dass** jedes der Futterteile (22) des Weiteren einen Trägerstreifen (224) aufweist, der sich von dem freien dreieckigen Abschnitt erstreckt und an die Stoffsubstratschicht (1) gebunden ist.

13. Flexibles Gewebe (100) für Kleidung nach einem der Ansprüche 9 bis 12, **dadurch gekennzeichnet, dass** jedes der Futterteile (22) des Weiteren einen Trägerstreifen (224) aufweist, der sich von dem freien trapezoiden Abschnitt erstreckt und an die Stoffsubstratschicht (1) gebunden ist.

14. Flexibles Gewebe (100) für Kleidung nach einem der Ansprüche 1 bis 13, **dadurch gekennzeichnet, dass** das absorbierende Polymer aus der Gruppe, bestehend aus thermoplastischem Polyurethan, thermoplastischem Elastomer und Polytetrafluorethylen ausgewählt wird.

15. Flexibles Gewebe (100) für Kleidung nach einem der Ansprüche 1 bis 14, des Weiteren **gekennzeichnet durch** eine Haftschicht (3), die sich zwischen der Stoffsubstratschicht (1) und der Futterteileinheit (2) befindet.

## Revendications

1. Bande souple (100) pour vêtement, comprenant :
une couche de substrat de tissu (1) présentant une pluralité de fentes (13) qui sont déplacées les unes par rapport aux autres et chacune d'elles comprend un premier segment de fente (131) et un deuxième segment de fente (132) ; **caractérisée par**
une unité de pièces de doublure (2) fabriquée à partir d'un polymère absorbant et incluant une pluralité de pièces de doublure (22) présentant chacune un premier bord marginal (221) et un deuxième bord marginal (222), et chacune d'elles est configurée de telle sorte qu'une fois liée à ladite couche de substrat de tissu (1), lesdits premier et deuxième bords marginaux (221, 222) créent une délimitation respectivement au niveau desdits premier et deuxième segments de fente (131, 132).

2. Bande souple (100) pour vêtement selon la revendication 1, **caractérisée en ce que** lesdits premier et deuxième segments de fente (131, 132) s'étendent respectivement le long de première et deuxième lignes qui forment un angle.

3. Bande souple (100) pour vêtement selon la revendication 1 ou 2, **caractérisée en ce que** lesdits premier et deuxième segments de fente (131, 132) sont alignés l'un sur l'autre.

4. Bande souple (100) pour vêtement selon l'une quelconque des revendications 1 à 3, **caractérisée en ce que** lesdits premier et deuxième segments de fente (131, 132) s'étendent l'un par rapport à l'autre le long d'une direction circonférentielle.

5. Bande souple (100) pour vêtement selon l'une quelconque des revendications 1 à 4, **caractérisée en ce que** lesdits premier et deuxième segments de fente (131, 132) partagent un point d'extrémité commun.

6. Bande souple (100) pour vêtement selon l'une quelconque des revendications 1 à 5, **caractérisée en ce que** chacune desdites fentes (13) inclut en outre un troisième segment de fente (133) reliant lesdits premier et deuxième segments de fente (131, 132) l'un à l'autre, et chacune desdites pièces de doublure (22) présente en outre un troisième bord marginal (223) reliant lesdits premier et deuxième bords marginaux (221, 222) l'un à l'autre et créant une délimitation au niveau dudit troisième segment de fente (133).

7. Bande souple (100) pour vêtement selon l'une quelconque des revendications 1 à 6, **caractérisée en ce que** lesdits premier et deuxième bords marginaux (221, 222) de chacune desdites pièces de doublure (22) définissent un contour semi-circulaire de telle sorte que chacune desdites pièces de doublure (22) est pourvue d'une partie semi-circulaire libre qui est capable de gondoler.

8. Bande souple (100) pour vêtement selon l'une quelconque des revendications 1 à 7, **caractérisée en ce que** lesdits premier et deuxième bords marginaux (221, 222) de chacune desdites pièces de doublure (22) définissent un contour incliné de telle sorte que chacune desdites pièces de doublure (22) est pourvue d'une partie triangulaire libre qui est capable de gondoler.

9. Bande souple (100) pour vêtement selon l'une quelconque des revendications 6 à 8, **caractérisée en ce que** lesdits premier, deuxième et troisième bords marginaux (221, 222, 223) de chacune desdites pièces de doublure (22) définissent un contour tronqué de telle sorte que chacune desdites pièces de doublure (22) est pourvue d'une partie trapézoïdale libre qui est capable de gondoler.

10. Bande souple (100) pour vêtement selon l'une quelconque des revendications 1 à 9, **caractérisée en ce que** ladite unité de pièces de doublure (2) est une couche de doublure (21) qui est configurée pour simuler ladite couche de substrat de tissu (1) en forme de telle sorte que ladite couche de substrat de tissu (1) est superposée sur ladite couche de doublure (2) et de telle sorte que ladite couche de doublure (21) est formée avec une pluralité de fentes correspondant auxdites fentes (13) de ladite couche de substrat de tissu (1).

11. Bande souple (100) pour vêtement selon l'une quelconque des revendications 7 à 10, **caractérisée en ce que** chacune desdites pièces de doublure (22) inclut en outre une bande de base (224) s'étendant depuis ladite partie semi-circulaire libre et liée à ladite couche de substrat de tissu (1).

12. Bande souple (100) pour vêtement selon l'une quelconque des revendications 8 à 11, **caractérisée en ce que** chacune desdites pièces de doublure (22) inclut en outre une bande de base (224) s'étendant depuis ladite partie triangulaire libre et liée à ladite couche de substrat de tissu (1).

13. Bande souple (100) pour vêtement selon l'une quelconque des revendications 9 à 12, **caractérisée en ce que** chacune desdites pièces de doublure (22) inclut en outre une bande de base (224) s'étendant depuis ladite partie trapézoïdale libre et liée à ladite couche de substrat de tissu (1).

14. Bande souple (100) pour vêtement selon l'une quelconque des revendications 1 à 13, **caractérisée en ce que** ledit polymère absorbant est sélectionné à partir du groupe constitué de polyuréthane thermoplastique, d'élastomère thermoplastique et de polytétrafluoroéthylène.

15. Bande souple (100) pour vêtement selon l'une quelconque des revendications 1 à 14, **caractérisée en outre par** une couche adhésive (3) prise en sandwich entre ladite couche de substrat de tissu (1) et ladite unité de pièces de doublure (2).
